# EUROPÄISCHE PATENTSCHRIFT

(11) **EP 0 656 830 B1**
(45) Veröffentlichungstag und Bekanntmachung des Hinweises auf die Patenterteilung: **24.04.1996**
(21) Anmeldenummer: 93919203.5
(22) Anmeldetag: 27.08.1993
(51) Int. Cl.: B32B 9/02, B32B 5/18, B65D 65/46

(54) **BIOLOGISCH ABBAUBARES SCHICHTVERBUNDMATERIAL AUF DER BASIS VON GEHÄRTETEM STÄRKESCHAUM UND VERFAHREN ZU SEINER HERSTELLUNG**
BIODEGRADABLE LAMINATED COMPOSITE MATERIAL BASED ON HARDENED STARCH FOAM AND PROCESS FOR PREPARING THE SAME
MATERIAU COMPOSITE STRATIFIE BIODEGRADABLE A BASE DE MOUSSE DURCIE D'AMIDON ET SON PROCEDE DE PREPARATION

(30) Priorität: 28.08.1992 DE 4228779; 27.05.1993 DE 4317691
(43) Veröffentlichungstag der Anmeldung: 14.06.1995
(73) Patentinhaber: BIOTEC BIOLOGISCHE NATURVERPACKUNGEN GMBH & CO. FORSCHUNGS- UND ENTWICKLUNGS KG, D-46446 Emmerich (DE)
(72) Erfinder: LÖRCKS, Jürgen, D-46459 Rees (DE); POMMERANZ, Winfried, D-32130 Enger (DE); HEUER, Joachim, D-47559 Kranenburg (DE); KLENKE, Kurt, D-47533 Kleve (DE); SCHMIDT, Harald, D-46446 Emmerich (DE)
(74) Vertreter: VOSSIUS & PARTNER
(86) Internationale Anmeldenummer: EP9302323
(87) Internationale Veröffentlichungsnummer: WO9405492

(56) Entgegenhaltungen:
- EP-A- 0 376 201
- EP-A- 0 409 788
- WO-A-92/16584

## Beschreibung

Die Erfindung betrifft ein biologisch abbaubares Schichtverbundmaterial auf der Basis von gehärtetem Stärkeschaum und ein Verfahren zu seiner Herstellung.

Derartige Verbundmaterialien können als Verpackungsmaterial, als Baumaterial etwa zur Kälte-, Wärme- oder Schallisolation, oder auch als Stoßschutz zum Einsatz kommen.

Herkömmliche Schaumverpackungen aus Polystyrol (Styropor), insbesondere für Nahrungsmittel, sind vor allem in der Entsorgung problematisch. Dieser Kunststoff verrottet praktisch nicht und ist erst nach einem Sortiervorgang recycelbar.

Bei einem bereits bekannten Verfahren wird statt eines Kunststoffes eine Stärkesuspension verwendet. In ein beheiztes Formwerkzeug eingebracht, verdampfen flüssige Anteile und schäumen bzw. blähen die Suspension auf. Das Material bleibt über eine bestimmte Verweilzeit in der Form, wobei es unter Feuchtigkeitsaustritt trocknet und aushärtet. Zum Entformen wird die Form geöffnet und der Schaumteil ausgeworfen. Solchermaßen hergestellte Schaumteile verrotten und sind recycelbar. Außerdem haben sie gewisse kälte-, wärmeisolierende sowie stoßabsorbierende Eigenschaften. Sie haben jedoch den Nachteil einer verhältnismäßig geringen Festigkeit, wenn ihre Wandstärke bzw. ihr Gewicht nicht allzu hoch sind. Außerdem sind sie aufgrund ihrer porösen Oberflächen für gewisse Anwendungen ungeeignet, insbesondere schlecht bedruckbar.

Demgegenüber liegt der Erfindung die Aufgabe zugrunde, ein biologisch abbaubares Schichtverbundmaterial zur Verfügung zu stellen, das sich durch hohe Festigkeit, eine einfache und kostengünstige Herstellung und eine vielseitige Anwendbarkeit auszeichnet.

Diese Aufgabe wird mit den Merkmalen der Patentansprüche gelöst.

Bei der Lösung geht die Erfindung von dem Grundgedanken aus, Stärke zu einer Schicht zu verschäumen, zu härten, sowie gleichzeitig mit einer zusätzlichen Schicht eines weiteren Schichtmaterials zu verbinden und somit ein Schichtverbundmaterial zu erhalten. Dieses weitere Schichtmaterial kann z.B. in den Stärkeschaum eingelagert und/oder einseitig oder beidseitig an diesen angelagert sein und dient als Verstärkung, als Träger oder Substrat.

Die Erfindung hat folgende Vorteile.

Es kann Stärke ohne weitere Zusätze verwendet werden. Es können die unterschiedlichsten Materialien mit dem Stärkeschaum zu einem Schichtverbundmaterial zusammengesetzt werden, insbesondere läßt sich über das weitere Schichtmaterial das Schichtverbundmaterial leicht bedrucken oder färben. Das Schichtverbundmaterial ist mechanisch stabil und besitzt aufgrund der Porösität des gehärteten Stärkeschaums ausgezeichnete Schall-, Temperatur- und elektrische Isolationseigenschaften. Außerdem ist es ein wirkungsvoller Stoßschutz. Besonders vorteilhaft ist die Erfindung als Material für Verpackungen von Süßwaren, da das Schichtverbundmaterial eine entsprechende werbewirksame Bedruckung ermöglicht, sowie die für Süßwaren erforderlichen Stoßschutz und Wärmeisolation gewährleistet.

Im folgenden soll die Erfindung näher erläutert werden.

Das erfindungsgemäße Schichtverbundmaterial besteht mindestens aus einer Schicht von gehärtetem Stärkeschaum, der mit mindestens einem weiteren Material zu einem Schichtverbundmaterial zusammengefügt ist. Vorzugsweise ist das weitere Material ein Flachmaterial, das vorzugsweise einseitig von dem Stärkeschaum bedeckt ist.

Das erfindungsgemäße Verfahren geht von einer Stärkesuspension aus, die native Stärke und/oder modifizierte Stärke enthalten kann. Es kommt native Stärke jeglichen Ursprungs in natürlicher oder Hybridform, z.B. Kartoffeln, Manjok, Reis, Mais, wachsiger Mais, Mais mit hohem Amylosegehalt, Getreide, wie Weizen und Fraktionen, die hieraus hergestellt sein können, Gerste oder Sorghum, in Betracht. Die modifizierte Stärke ist ein auf physikalischem und/oder chemischem Weg erzeugtes Stärkederivat. Bevorzugt kommt eine wäßrige Stärkesuspension zum Einsatz, die mit einem insbesondere lebensmittelverträglichem Farbstoff eingefärbt sein kann.

Außerdem kommt bei dem Verfahren ein weiteres Schichtmaterial zum Einsatz, bei dem es sich vorzugsweise um Papier, Pappe, Karton, Textil, Holzfurnier, Leder, Kunstleder, Folien aus synthetischen, biopolymeren und metallen Werkstoffen sowie Kombinationen der vorgenannten Materialien handelt. Dabei handelt es sich vorzugsweise um ein Flachmaterial. Das weitere Schichtmaterial wird durch die Endform des Schichtverbundmaterials, beispielsweise eine Verpackung, bestimmt und kann als Zuschnitt oder vorgeformt in die Form eingebracht werden. Dies geschieht bevorzugt kurze Zeit vor Zugabe der Stärkesuspension.

Die Stärkesuspension wird bevorzugt durch Einspritzen dosiert in das Formwerkzeug eingeführt. In der beheizten Form schäumt sie infolge Verdampfung auf und füllt die Kavitäten aus. Dabei und während der Trocknung sowie des chemisch-physikalischen Aushärtens verbindet sich die Stärke mit dem weiteren Schichtmaterial zu einer Einheit, die anschließend als Schichtverbundmaterial entformt wird. Diese Vorgänge werden durch einen erhöhten Innendruck des Formwerkzeugs gefördert und bevorzugt druck- und temperaturgesteuert durchgeführt.

Dabei ist es überraschend, daß die relativ hohe Formtemperatur das weitere Schichtmaterial bei geeigneter Durchführung des Verfahrens nicht beeinträchtigt. Dies gilt auch für eine Bedruckung, die dem weiteren Schichtmaterial, insbesondere aus Papier, Pappe oder Karton, vor dem Einlegen in das Formwerkzeug und einer nachfolgenden Verformung aufgebracht werden kann. Insbesondere, wenn die Stärkesuspension einseitig auf dem weiteren Schichtmaterial aufgebracht ist, ist die Bedruckung nach dem Entformen auf einer Seite des Schichtverbundmaterials sichtbar. Bei einseitigem Aufbringen der Stärkesuspension kann auch recyceltes Kartonmaterial für eine Verpackung von Nahrungsmitteln verwendet werden, welches an der Verpackungsaußenseite nicht mit dem Nahrungsmittel in Berührung kommt.

Für mehrere bedruckbare oder glatte Oberflächen bzw. aus Festigkeitsgründen kann das weitere Schichtmaterial in mehreren Schichten in das Formwerkzeug eingebracht werden. Die Stärkesuspension wird dann vor allem zwischen den Schichten des weiteren Schichtmaterials eingebracht.

Durch geeignete Gestaltung des Formwerkzeuges können Strukturen in das Schichtverbundmaterial geformt werden, beispielsweise Durchbrechungen, Vertiefungen, Stege oder Rippen. Dies kann zu Verpackungszwecken aber auch aus Festigkeitsgründen sinnvoll sein. Außerhalb des Formwerkzeuges ist eine weitere Bearbeitung durch Verformen, Prägen, Stanzen und/oder Formatieren möglich.

Eine bevorzugte Anwendung des Verfahrens ist die Herstellung von Verpackungen. Dabei kann das weitere Schichtmaterial für eine Verpackungsschale schalenartig vorgeformt werden.

Der Verbund aus weiterem Schichtmaterial und Stärkeschaum ergibt eine vielfach höhere Festigkeit des fertigen Teils als seine einzelnen Komponenten oder deren Addition ohne eine innige Verbindung. Das Schichtverbundmaterial hat ein niedriges spezifisches Gewicht und kommt mit verhältnismäßig geringen Wandstärken aus. Zudem weist es bedeutend bessere kälte- und wärmeisolierende sowie stoßabsorbierende Eigenschaften als herkömmliche Kunststoffe auf und ist antistatisch.

Die Verbindung von z.B. Flachmaterial und Stärkeschaum erfordert keine Additive wie Heiß- oder Kaltleim oder Kunststoffe usw. Daraus ergibt sich neben der biologischen Abbaubarkeit und Kompostierbarkeit die Möglichkeit eines problemlosen Recyclings, da das Schichtverbundmaterial entsorgungstechnisch als Monomaterial und damit mit sehr geringen Kosten entsorgt werden kann. Insbesondere beim Einsatz von Papier, Karton oder Pappe als Flachmaterial kann das Schichtverbundmaterial bei der Papier-, Karton- oder Pappherstellung wiederverwendet werden.

Die Eigenschaften des erfindungsgemäßen Schichtverbundmaterials eröffnen auch außerhalb des Verpackungssektors viele Anwendungsmöglichkeiten. So ist ein Einsatz zu Isolationszwecken als Baustoff, in der Elektrotechnik und in der Automobilindustrie denkbar. Ferner kommt eine Verwendung für modische Gebrauchsgegenstände vergleichsweise hoher Stabilität, wie Möbel, in Betracht, die infolge ihrer Kurzlebigkeit recycelbar sein müssen.

Nachfolgend wird das erfindungsgemäße Verfahren anhand eines Beispiels näher beschrieben.

In einem kontinuierlichen Prozeß wird eine Stärkesuspension hergestellt, wobei flüssige und feste Hilfsmittel automatisch dosiert in einer Homogenisierungsstufe fein verteilt und zur Reaktion gebracht werden. Kartoffelstärke, Maisquellstärke und Wasser liegen in der Suspension in einem Gewichtsverhältnis von 100:5,2:106 vor.

Ferner wird eine temperatur- und druckgesteuerte Expansionsformanlage, bauartverwandt mit einem Waffeleisen, mit einem gußeisernen Werkzeugteil in Form einer Verpackungsschale auf 220°C aufgeheizt. Das Formwerkzeug der Formanlage ist zweiteilig ausgebildet. In das untere Formteil wird eine vorgeformte Schale als Kartonflachmaterial eingelegt. Dann werden 21,5 g der Stärkesuspension in die Schale eingefüllt und das zweiteilige Formwerkzeug geschlossen. Die Stärkesuspension wird aufgeschäumt, getrocknet und ausgehärtet und dabei fest mit der Kartonschale verbunden. Nach etwa 70 Sekunden Verweilzeit wird die fertige Verpackungsschale in Form eines Schichtverbundmaterials entnommen.

Die Expansionsformanlage ist zur Herstellung vielfältiger Oberflächenstrukturen für plattenförmige Schichtverbundmaterialien umrüstbar. Dazu muß lediglich das gußeiserne Werkzeugteil ausgewechselt werden. Dadurch sind beispielsweise Sortiereinsätze für Behälter zur Aufbewahrung von Kleinteilsortimenten (z.B. Schrauben oder kleine Haushaltsgegenstände) oder für die Aufbewahrung druckempfindlicher und leicht verderblicher Lebensmittel (z.B. Pralinen oder Eier) in großer Vielfalt herstellbar.

Die Schale hat ein spezifisches Gewicht von 190 kg/m³ und ausgezeichnete Eigenschaften als Verpackungsmaterial. Sie verbindet hohe Festigkeit mit niedrigem Gewicht, hat kälte- und wärmeisolierende, stoßabsorbierende und antistatische Eigenschaften und ist sowohl biologisch schnell abbaubar und kompostierbar als auch in der Papierindustrie hervorragend recycelbar.

## Patentansprüche

1. Schichtverbundmaterial, bestehend aus mindestens einer Schaumstoffschicht und mindestens einer weiteren Schicht,
dadurch gekennzeichnet, daß der Schaumstoff ein gehärteter Stärkeschaum ist und die Schichten in situ ohne Haftmittler miteinander verbunden sind.

2. Verbundmaterial nach Anspruch 1, dadurch gekennzeichnet, daß der Stärkeschaum native Stärke enthält.

3. Verbundmaterial nach einem der Ansprüche 1 oder 2, dadurch gekennzeichnet, daß der Stärkeschaum modifizierte Stärke enthält.

4. Verbundmaterial nach einem der Ansprüche 1 bis 3, dadurch gekennzeichnet, daß der Stärkeschaum eingefarbt ist.

5. Verbundmaterial nach einem der Ansprüche 1 bis 4, dadurch gekennzeichnet, daß der Stärkeschaum Fasern und/oder Füllstoffe enthält.

6. Verbundmaterial nach einem der Ansprüche 1 bis 5, dadurch gekennzeichnet, daß die weitere Schicht aus Papier, Pappe, Karton, Textil aus natürlichen und/oder synthetischen Fasern, aus Glas und/oder Keramikfasern und/oder Mischgeweben, Holzfurnier, Leder, Kunstleder, Folie aus synthetischen, biopolymeren und metallischen Werkstoffen, Filme aus synthetischen und/oder biopolymeren Werkstoffen, die bei der Herstellung des Verbundmaterials in situ erzeugt werden, sowie Kombinationen der vorgenannten Materialien besteht.

7. Verbundmaterial nach einem der Ansprüche 1 bis 6, dadurch gekennzeichnet, daß die weitere Schicht einseitig mit dem Stärkeschaum verbunden ist.

8. Verbundmaterial nach einem der Ansprüche 1 bis 7, dadurch gekennzeichnet, daß das Material der weiteren Schicht bedruckt oder bedruckbar ist.

9. Verbundmaterial nach einem der Ansprüche 1 bis 8, dadurch gekennzeichnet, daß das weitere Schichtmaterial aus mehreren Schichten besteht.

10. Verbundmaterial nach Anspruch 9, dadurch gekennzeichnet, daß der Stärkeschaum zwischen den mehreren Schichten angeordnet ist.

11. Verbundmaterial nach einem der Ansprüche 1 bis 10, dadurch gekennzeichnet, daß es als Platte ausgebildet ist, die Vertiefungen aufweist.

12. Verbundmaterial nach Anspruch 11, dadurch gekennzeichnet, daß die in die Platte eingepreßten Vertiefungen Hohlräume zwischen übereinander gestapelten Platten bilden.

13. Verpackungsmaterial, bestehend aus dem Schichtverbundmaterial nach einem der Ansprüche 1 bis 12, insbesondere zur Verpackung von Süßwaren.

14. Verfahren zum Herstellen des Schichtverbundmaterials nach einem der Ansprüche 1 bis 12 mit den Schritten:
a) Einbringen einer Stärkesuspension und mindestens eines weiteren Schichtmaterials in ein Formwerkzeug,
b) Aushärten des Stärkeschaums und gleichzeitiges Verbinden mit dem weiteren Material zum Ausbilden des Schichtverbundmaterials, und
c) Entformen des Schichtverbundmaterials.

15. Verfahren nach Anspruch 14, dadurch gekennzeichnet, daß das Formwerkzeug vor dem Schritt a) aufgeheizt wird.

16. Verfahren nach Anspruch 14 oder 15, dadurch gekennzeichnet, daß in Schritt a) eine wäßrige Stärkesuspension eingebracht wird.

17. Verfahren nach Anspruch 14, 15 oder 16, dadurch gekennzeichnet, daß in Schritt a) eine eingefärbte Stärkesuspension eingebracht wird.

18. Verfahren nach einem der Ansprüche 14 bis 17, dadurch gekennzeichnet, daß in Schritt a) die Stärkesuspension eingespritzt wird.

19. Verfahren nach einem der Ansprüche 14 bis 18, dadurch gekennzeichnet, daß in Schritt a) die Stärkesuspension durch Druck aufgeschäumt wird.

20. Verfahren nach einem der Ansprüche 14 bis 19, dadurch gekennzeichnet, daß in Schritt a) das weitere Material vor der Stärkesuspension eingebracht wird.

21. Verfahren nach einem der Ansprüche 14 bis 20, dadurch gekennzeichnet, daß in Schritt a) das weitere Material als flüssiges und/oder festes, pulverförmiges Material eingebracht wird und eine Schicht erzeugt wird, die mit dem Stärkeschaum das Schichtverbundmaterial ausbildet.

22. Verfahren nach einem der Ansprüche 14 bis 21, dadurch gekennzeichnet, daß in Schritt a) das weitere Material vorgeformt eingebracht wird.

23. Verfahren nach Anspruch 22, dadurch gekennzeichnet, daß das weitere Material schalenartig vorgeformt wird.

24. Verfahren nach einem der Ansprüche 14 bis 23, dadurch gekennzeichnet, daß in Schritt a) eine Stärkesuspension, bestehend aus 20 bis 45 % granulärer Stärke, 0 bis 10 % Quellstärke und Wasser, eingebracht wird, wobei das Formwerkzeug auf eine Temperatur von 180 bis 270°C, vorzugsweise 200 bis 250°C, aufgeheizt ist, und der Schritt c) nach 30 bis 90 Sekunden, vorzugsweise nach 45 bis 75 Sekunden, erfolgt.

25. Verwendung des Verbundmaterials nach einem der Ansprüche 1 bis 12 als Sortiereinsatz für Behälter zur Verpackung von stückigem Gut, insbesondere Pralinen, als Faltschachtel oder als Polsterung zum Transportschutz, als Wärmeisolierverpackung für Tiefkühlprodukte oder für Becher für Kalt- und Heißgetränke.

## Claims

1. Laminated composite material comprising at least a foam layer and at least one additional layer
characterized in that the foam material is cured starch foam and the layers are interconnected in situ without a coupling agent.

2. Composite material as defined in claim 1 characterized in that the starch foam contains native starch.

3. Composite material as defined in any of claims 1 and 2 characterized in that the starch foam contains modified starch.

4. Composite material as defined in any of claims 1 to 3 characterized in that the starch foam is dyed.

5. Composite material as defined in any of claims 1 to 4 characterized in that the starch foam contains fibers and/or fillers.

6. Composite material as defined in any of claims 1 to 5 characterized in that the additional layer is made of paper, paperboard, cardboard, textiles from natural and/or synthetic fibers, from glass and/or ceramic fibers and/or mixed fabrics, wood veneer, leather, imitation leather, sheets from synthetic, biopolymeric and metallic materials, films from synthetic and/or biopolymeric materials that are produced in situ in the preparation of the composite material, as well as combinations of the aforementioned materials.

7. Composite material as defined in any of claims 1 to 6 characterized in that the additional layer is combined with the starch foam unilaterally.

8. Composite material as defined in any of claims 1 to 7 characterized in that the additional layer is or can be printed on.

9. Composite material as defined in any of claims 1 to 8 characterized in that the additional layer is composed of a plurality of layers.

10. Composite material as defined in claim 9 characterized in that the starch foam is positioned between the plurality of layers.

11. Composite material as defined in any of claims 1 to 10 characterized in that it is formed to a plate having cavities.

12. Composite material as defined in claim 11 characterized in that the cavities pressed in the plate form hollow spaces between stacked plates.

13. Packaging material comprising the laminated composite material as defined in any of claims 1 to 12 especially for use in packages for sweets.

14. A method for preparing laminated composite material as defined in any of claims 1 to 12 comprising the steps of:
a. introducing a starch suspension and at least one further laminate material in a die,
b. curing the starch foam and simultaneously combining it with said further material to form laminated composite material, and
c. removing said laminated composite material from the mold.

15. A method as defined in claim 14 characterized in that the die is heated prior to step a.

16. A method as defined in claim 14 or 15 characterized in that an aqueous starch suspension is added in step a.

17. A method as defined in claim 14, 15 or 16 characterized in that a dyed starch suspension is added in step a.

18. A method as defined in any of claims 14 to 17 characterized in that the starch suspension is injected in step a.

19. A method as defined in any of claims 14 to 18 characterized in that the starch suspension is pressure-foamed in step a.

20. A method as defined in any of claims 14 to 19 characterized in that the further material is added prior to the starch suspension in step a.

21. A method as defined in any of claims 14 to 20 characterized in that the further material is added as liquid and/or solid, powdery material and a layer is produced in step a, which layer combined with the starch foam forms the laminated composite material.

22. A method as defined in any of claims 14 to 21 characterized in that the further material is first preformed and then introduced in step a.

23. A method as defined in claim 22 characterized in that the further material is preformed to a shell.

24. A method as defined in any of claims 14 to 23 characterized in that a starch suspension comprising 20-45% of granular starch, 0-10% of swelling starch and water is added in step a, wherein the die is heated to a temperature of 180-270°C, preferably 200-250°C, and step c is taken after 30-90 seconds, preferably 45-75 seconds.

25. Use of the composite material as defined in any of claims 1 to 12 as sorting devices for containers for packaging goods, in particular chocolates, as foldable boxes or as padding to avoid transportation damage, as heat insulation packaging for frozen products or as cups for cold and hot drinks.

## Revendications

1. Matériau composite stratifié, constitué d'au moins une couche de matière mousse et d'au moins une autre couche, caractérisé en ce que la matière mousse est une mousse d'amidon durcie et en ce que les couches sont mutuellement reliées in situ sans agent d'adhérence.

2. Matériau composite suivant la revendication 1, caractérisé en ce que la mousse d'amidon contient de l'amidon naturel.

3. Matériau composite suivant l'une des revendications 1 et 2, caractérisé en ce que la mousse d'amidon contient de l'amidon modifié.

4. Matériau composite suivant l'une des revendications 1 à 3, caractérisé en ce que la mousse d'amidon est teintée.

5. Matériau composite suivant l'une des revendications 1 à 4, caractérisé en ce que la mousse d'amidon contient des fibres et/ou des matières de remplissage.

6. Matériau composite suivant l'une des revendications 1 à 5, caractérisé en ce que l'autre couche est constituée de papier, de carton-pâte, de carton, d'une matière textile à base de fibres naturelles et/ou synthétiques, de verre et/ou de fibres céramiques et/ou de tissus mixtes, de placage de bois, de cuir, de cuir artificiel, d'une feuille à base de matériaux synthétiques biopolymères et métalliques, de films en matériaux synthétiques et/ou biopolymères, qui sont produits in situ lors de la fabrication du matériau composite, ainsi que de combinaisons des matières précitées.

7. Matériau composite suivant l'une des revendications 1 à 6, caractérisé en ce que l'autre couche est reliée sur une face à la mousse d'amidon.

8. Matériau composite suivant l'une des revendications 1 à 7, caractérisé en ce que la matière de l'autre couche est imprimée ou susceptible d'être imprimée.

9. Matériau composite suivant l'une des revendications 1 à 8, caractérisé en ce que l'autre matière en couche est constituée de plusieurs couches.

10. Matériau composite suivant la revendication 9, caractérisé en ce que la mousse d'amidon est disposée entre les plusieurs couches.

11. Matériau composite suivant l'une des revendications 1 à 10, caractérisé en ce qu'il est réalisé sous la forme d'une plaque qui présente des évidements.

12. Matériau composite suivant la revendication 11, caractérisé en ce que les évidements pressés dans la plaque forment des cavités entre des plaques empilées l'une sur l'autre.

13. Matériau d'emballage constitué du matériau composite stratifié suivant l'une des revendications 1 à 12, en particulier pour l'emballage d'articles sucrés.

14. Procédé de préparation du matériau composite stratifié suivant l'une des revendications 1 à 12, comprenant les étapes :
a) d'introduction d'une suspension d'amidon et d'au moins une autre matière en couche dans un outil de formage,
b) de durcissement de la mousse d'amidon et de liaison simultanée avec l'autre matière pour réaliser le matériau composite stratifié, et
c) de démoulage du matériau composite stratifié.

15. Procédé suivant la revendication 14, caractérisé en ce que l'outil de formage est chauffé avant l'étape a).

16. Procédé suivant l'une des revendications 14 et 15, caractérisé en ce qu'une suspension aqueuse d'amidon est introduite dans l'étape a).

17. Procédé suivant l'une des revendications 14, 15 et 16, caractérisé en ce qu'une suspension teintée d'amidon est introduite dans l'étape a).

18. Procédé suivant l'une des revendications 14 à 17, caractérisé en ce que la suspension d'amidon est injectée dans l'étape a).

19. Procédé suivant l'une des revendications 14 à 18, caractérisé en ce que la suspension d'amidon est amenée à mousser par pression dans l'étape a).

20. Procédé suivant l'une des revendications 14 à 19, caractérisé en ce que l'autre matière est introduite dans l'étape a) avant la suspension d'amidon.

21. Procédé suivant l'une des revendications 14 à 20, caractérisé en ce que l'autre matière est, dans l'étape a), introduite sous la forme d'une matière liquide et/ou solide, pulvérulente, et en ce qu'une couche est produite qui réalise le matériau composite stratifié avec la mousse d'amidon.

22. Procédé suivant l'une des revendications 14 à 21, caractérisé en ce que l'autre matière est introduite dans l'étape a) à l'état préformé.

23. Procédé suivant la revendication 22, caractérisé en ce que l'autre matière est préformée sous la forme d'une coque.

24. Procédé suivant l'une des revendications 14 à 23, caractérisé en ce qu'une suspension d'amidon, constituée de 20 à 45 % d'amidon en grains, de 0 à 10 % d'amidon gonflant et d'eau est introduite dans l'étape a), l'outil de formage étant chauffé à une température de 180 à 270°C, de préférence de 200 à 250°C, et en ce que l'étape c) a lieu après 30 à 90 secondes, de préférence après 45 à 75 secondes.

25. Utilisation du matériau composite suivant l'une des revendications 1 à 12, comme élément inséré d'assortiment pour des récipients destinés à l'emballage de produits en morceaux, en particulier de pralines, comme boîte pliante ou comme capitonnage pour la protection pendant le transport, comme emballage isolant thermique pour des produits frigorifiques ou pour des godets de boissons froides et chaudes.
